# EUROPEAN PATENT SPECIFICATION

(11) **EP 1 283 432 B1**
(45) Date of publication and mention of the grant of the patent: **08.02.2006**
(21) Application number: 02255478.6
(22) Date of filing: 06.08.2002
(51) Int. Cl.: G02B 27/01, G02B 5/26

(54) **Windowpane for head up display**
Fensterscheibe für eine Head-up-Anzeige
Vitre pour afficheur tête haute

(30) Priority: 06.08.2001 JP 2001238092; 19.02.2002 JP 2002041950
(43) Date of publication of application: 12.02.2003
(73) Proprietor: Nippon Sheet Glass Co., Ltd., Osaka-shi, Osaka 541-8559 (JP)
(72) Inventor: Muromachi, Takashi, Nippon Sheet Glass Co. Ltd., Osaka-shi, Osaka 541-8559 (JP); Okamoto, Hideki, c/o Nippon Sheet Glass Co., Ltd., Osaka-shi, Osaka 541-8559 (JP)
(74) Representative: Jackson, Robert Patrick

(56) References cited:
- FR-A- 2 569 863
- GB-A- 2 347 758
- US-A- 5 496 621
- PATENT ABSTRACTS OF JAPAN vol. 1998, no. 06, 30 April 1998 (1998-04-30) & JP 10 045435 A (CENTRAL GLASS CO LTD), 17 February 1998 (1998-02-17)
- PATENT ABSTRACTS OF JAPAN vol. 2000, no. 12, 3 January 2001 (2001-01-03) & JP 2000 256042 A (NIPPON SHEET GLASS CO LTD), 19 September 2000 (2000-09-19)
- PATENT ABSTRACTS OF JAPAN vol. 2000, no. 15, 6 April 2001 (2001-04-06) & JP 2000 335940 A (NIPPON SHEET GLASS CO LTD), 5 December 2000 (2000-12-05)

## Description

The present invention relates to a windowpane for a vehicle having a combiner for a head-up display (hereinafter referred to simply as HUD).

JP-Z-2500821 discloses a transparent reflection enhancing film as a HUD combiner that is made of metal oxide with a refractive index of 1.8 to 2.3 and has an optical film thickness of 400 to 1500 Å (40 to 150 nm).

JP-A-6(1994)-305775 discloses a vehicle windowpane characterized in that a low-reflectance thin film is formed on the surface of a glass substrate and includes a plurality of thin films, and a thin film as the first layer that is in direct contact with the glass surface is allowed to be exposed at least in its predetermined region, and the thin film formed in the predetermined region has a higher refractive index than a relatively low refractive index of a thin film as the outermost layer. In addition, JP-A-6(1994)-305775 describes that thin films with different refractive indices are formed and stacked in two or three layers to form the low-reflectance thin film and the vehicle window glass with the above-mentioned structure can be used as a combiner glass plate for a HUD.

JP-A-6(1994)-340450 discloses a vehicle windowpane characterized in that a low-reflectance thin film is formed on the surface of a glass substrate and includes a plurality of thin films, and a thin film as the first layer that is in direct contact with the glass surface is allowed to be exposed at least in its predetermined region, and the thin film formed in the predetermined region has a higher refractive index than a relatively low refractive index of a thin film as the outermost layer. The whole or a part of the predetermined region is coated with a thin film of at least one layer stacked thereon.

Moreover, US5,496,621 based on the patent applications published as the above-mentioned JP-A-6(1994)-305775 and JP-A-6(1994)-340450 includes numerical limitations such as a refractive index of 1.80 to 2.10 and a film thickness of 70 to 230 nm as to the first layer, a refractive index of 1.40 to 1.50 and a film thickness of 110 to 130 nm as to the second layer, and the like.

However, when the above-mentioned reflection enhancing film described in JP-Z-2500821 is applied to a laminated glass with a visible light transmissivity of about 84% (e.g. a green glass plate + an intermediate film + a clear glass plate), a region where the reflection enhancing film is formed cannot meet the standards of a visible light transmissivity of at least 75% required for securing driving view.

When the standards for visible light transmissivity are intended to be met, it is necessary to use a laminated glass with a higher visible light transmissivity such as one sequentially including a clear glass plate, an intermediate film, and a green glass plate, one sequentially including a clear glass plate, an intermediate film, and a clear glass plate, or the like. However, the use of such a laminated glass increases solar radiation transmissivity and causes a disadvantage of an increased cooling load.

JP-A-6(1994)-305775 and JP-A-6(1994)-340450 each disclose a technique of allowing the first layer of a low reflectance film composed of two or three layers to be exposed and to be used as a combiner. JP-A-6(1994)-305775 and JP-A-6(1994)-340450 each disclose a thin film with a retractive index of 1.8 to 2.1 and a film thickness of 700 to 2300A (70 to 230 nm) as the first layer thin film of the low-reflectance film.

JP-A-10(1998)-45435 discloses a low-reflectance glass plate and describes a thin film layer with a refractive index of 1.78 to 2.30 and a film thickness of 20 to 120 nm as the first layer of a low-reflectance film

JP-A-2000-256042 discloses a low-reflectance glass article for an automobile and describes a thin film layer with a refractive index of 1.65 to 2.20 and a film thickness of 110 to 150 nm as the first layer of a low-reflectance film.

JP-A-2000-335940 discloses a low-reflectance glass article and describes the first layer with a refractive index of 1.65 to 2.20 and a film thickness of 90 to 150 nm included in a low-reflectance film.

Viewed from a first aspect, the present invention provides a windowpane for a vehicle, provided with a head-up display combiner, which comprises:
a soda-lime silica glass plate; and
a reflection enhancing film for the head-up display combiner that is formed in a first region of a surface of the glass plate,
a second region of the surface where no film is formed,
wherein the reflection enhancing film has a refractive index of 1.75 to 2.4 and a film thickness of 90 nm to 130 nm, and
in the first region the windowpane has a visible light transmissivity of at least 75%. Here, the film thickness denotes a physical film thickness, not an optical film thickness.

Additional preferred features of the invention are defined in the dependent claims.
FIG. I is a plan view of an embodiment of a windowpane according to the present invention.
FIG. 2 is a sectional view of the windowpane shown in FIG.1.
FIG. 3 is a sectional view for explaining flexography.
FIG. 4 is a drawing for explaining a modified example including gradation dots formed around a combiner part.

In the present invention, the glass plate can be a laminated glass with an excellent solar control property. The laminated glass includes a green glass plate, a clear glass plate and an intermediate film that bonds the glass plates together. Here, a green glass plate denotes a glass plate composed of a glass composition that includes at least 0.5wt%, preferably at least 0.52wt% of iron oxide based on Fe₂O₃. The laminated glass preferably has a visible light transmissivity of at least 84%.

In the first region where the reflection enhancing film functions as a HUD combiner (a combiner region), a visible light reflectance at the surface where the film is formed with respect to light that is incident thereon at an angle of 60° is preferably at least 15%. The reflectance preferably is not more than 22%, preferably not more than 21%.

The windowpane also has a second region where the reflection enhancing film is not formed, and in the second region the solar radiation transmissivity is preferably not more than 65%. The iron oxide in the glass plate contributes to this low solar radiation transmissivity.

The reflection enhancing film may be formed of metal oxide. The reflection enhancing film preferably includes TiO₂ and/or SiO₂. When the reflection enhancing film is formed by a sol-gel method, the film preferably has a mole ratio of TiO₂ : SiO₂ is in a range of 40 : 60 to 100 : 0. When the reflection enhancing film is formed by sputtering, the film preferably has a mole ratio of TiO₂ : SiO₂ in a range of 31 : 69 to 100 : 0.

The windowpane is preferably free from a film that is formed on the reflection enhancing film, so as to provide a simple film structure. The reflection enhancing film should be a single layer.

The metal oxide for the reflection enhancing film is not particularly limited as long as it has a refractive index within the above-mentioned range. The metal oxide should be transparent and may be made of not only a single component but also a mixture of at least two components.

The method of forming the reflection enhancing film also is not particularly limited. Examples of the method include a sol-gel process, sputtering, a vapor deposition method, and ion plating.

When the sol-gel process is employed and a film with a refractive index n of about 2.2 is to be obtained, TiO₂ may be used alone as a single component. When a film with a refractive index n of about 1.75 to 2.2 is required, however, the film may be made of a mixture of TiO₂ (*n* = 2.2) and SiO₂ (*n* = 1.46). Both of the oxides can form a film by the sol-gel process.

In the sol-gel process, TiO₂ and SiO₂ are suitable since their respective alkoxides as starting materials can be mixed with each other at various mixture ratios and the refractive index of the mixed film thus obtained can be controlled freely. The obtained mixed film is excellent in durability. In addition, the alkoxides as starting materials of TiO₂ and SiO₂ both are stable, have high film formability, and allow a homogeneous film to be obtained easily. One or more other components such as ZrO₂ (*n* = 1.95) can be mixed with TiO₂ and SiO₂, if necessary.

Examples of titanium alkoxide include titanium methoxide, titanium ethoxide, titanium n-propoxide, titanium n-butoxide, titanium isobutoxide, titanium methoxypropoxide, titanium stearyloxide, and titanium 2-ethylhexyoxide. Titanium alkoxide halide such as titanium alkoxide chloride also can be used, examples of which include titanium chloride triisopropoxide and titanium dichloride diethoxide.

Examples of silicon alkoxide include silicon methoxide, silicon ethoxide, and oligomers thereof.

When using a vacuum deposition method such as a sputtering method, materials may be used including ThO₂ (*n* = 1.8), SnO₂ (*n* = 1.9), SiO *(n =* 1.7 to 2.0), ZrO₂ (*n* = 2.1), CeO₂ (*n* = 2.2), TiO₂ (*n* = 2.4), and the like. When a film is formed using TiO₂ by the sol-gel process described above, only a film with a refractive index *n* of about 2.2 is obtained. When a film is formed using TiO₂ by this sputtering technique, however, a film with a refractive index n of about 2.4 is obtained.

When the refractive index of the reflection enhancing film is below 1.75, a reflectance required for a combiner cannot be obtained. In addition, it is industrially difficult to obtain a reflection enhancing film with a refractive index exceeding 2.4.

In the HUD combiner according to the present invention, the combiner part has a visible light reflectance of at least 15% at its surface. Such a reflectance permits the part to be used as a combiner. Preferably, the visible light reflectance is 22% or lower at its surface. When this reflectance exceeds 22%, it is difficult to allow the combiner part to have a visible light transmissivity of 75%.

It is preferable that a laminated glass to be used have a visible light transmissivity of at least 84%. This is because when the visible light transmissivity of the laminated glass plate is below 84%, the visible light transmissivity of the combiner part might become below 75%.

The windowpane can provide a visible light transmissivity of at least 75% even in the combiner part and can be used for a windshield. The windowpane can have a solar radiation transmissivity of 65% or less in the whole region except the combiner part. Hence, it has an excellent solar control property.

In addition, gradation dots may be formed around the combiner part so as to make the presence of the combiner part appear natural.

### Preparation of Coating Solution

Initially, 500g of ethyl silicate 40 (COLCOAT Co., LTD) was hydrolyzed with 410g of ethylcellosolve and 90 g of 0.1 mol/L hydrochloric acid, which further was stirred. Thus, a solution A was prepared.

Next, 65.5 g of titanium tetraisopropoxide and 64.1 g of acetylacetone were mixed together and thereby a solution B was prepared.

These solutions A and B were mixed together at a ratio of 1 : 2.4, which then was diluted suitably with ethylcellosolve. Thus, a coating solution C was prepared. In this case, the ratio of TiO₂ : SiO₂ was 60:40 in terms of a mole ratio.

In a sol-gel process, when the mixture ratio is controlled so that the ratio of TiO₂ : SiO₂ is in the range of 40 : 60 to 100 : 0 in terms of a mole ratio, the refractive index of a mixture film of TiO₂ and SiO₂ can be set to be in the range of 1.75 to 2.2.

In the case of sputtering, when the target is controlled so that the ratio of TiO₂ : SiO₂ is in the range of 31 : 69 to 100 : 0 in terms of a mole ratio, the refractive index of a mixture film of TiO₂ and SiO₂ can be set to be in the range of 1.75 to 2.4.

### Example 1

Soda-lime silicate glass plates (a clear glass plate) that include about 0.12wt% of iron oxide (counted as Fe₂O₃) was prepared by a float process. The glass plates were cut into a predetermined size and were washed. One of the glass plates was coated with the above-mentioned coating solution C.

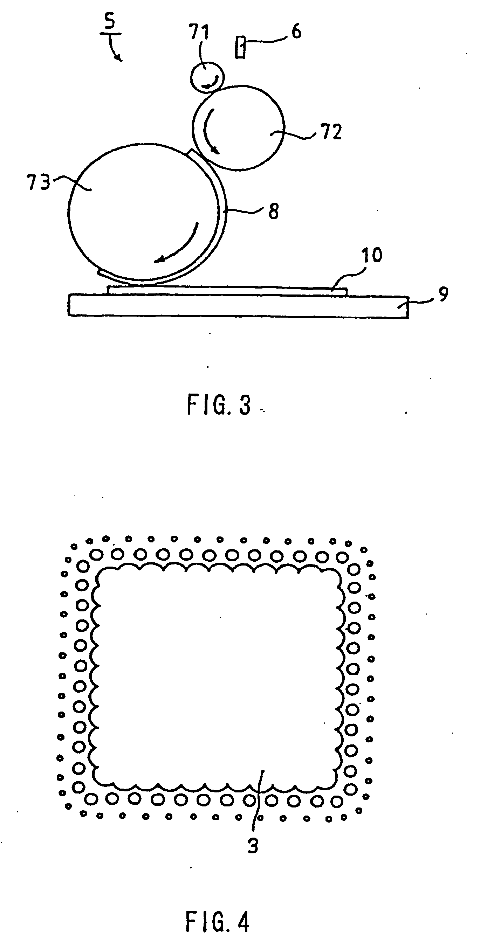

FIG. 3 shows a flexographic printer 5 used for the coating. A coating solution is supplied from a dispenser 6 onto a glass plate 10 on a carrier table 9 via an anilox roller 72 and a flexographic plate 8 on a printer roller 73. A doctor roll 71 prevents the coating solution from being excessively supplied.

The glass plate coated with the coating solution C was dried at about 300°C. Thus, a reflection enhancing film was formed.

This glass plate was baked at 620 to 630°C and then was subjected to bending to be formed as a windshield. The above-mentioned clear glass plate and a green glass plate that includes about 0.53wt% of iron oxide (counted as Fe₂O₃) processed to have a similar shape thereto were stacked on top of each other, then were placed on a sag-bending die, and were heated in a furnace to be bent by their own weight.

Thus, a glass plate was obtained that was provided with a reflection enhancing film formed thereon that had a refractive index n of about 1.92 and a physical film thickness dof about 110 nm. The region where the reflection enhancing film had been formed was intended to be used as a HUD combiner part.

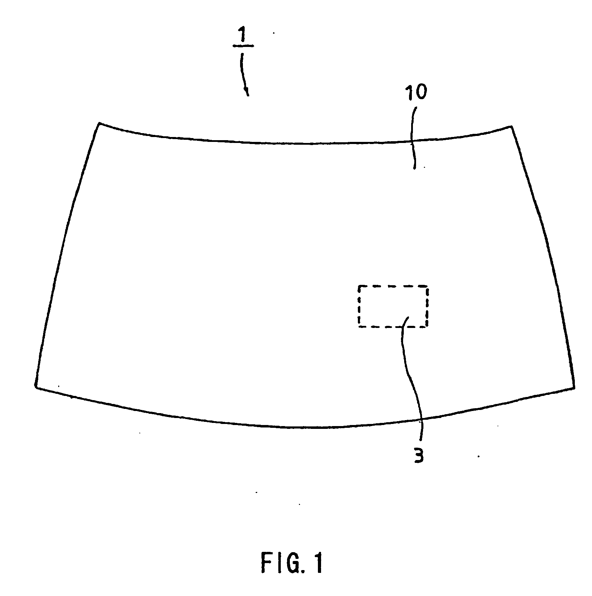

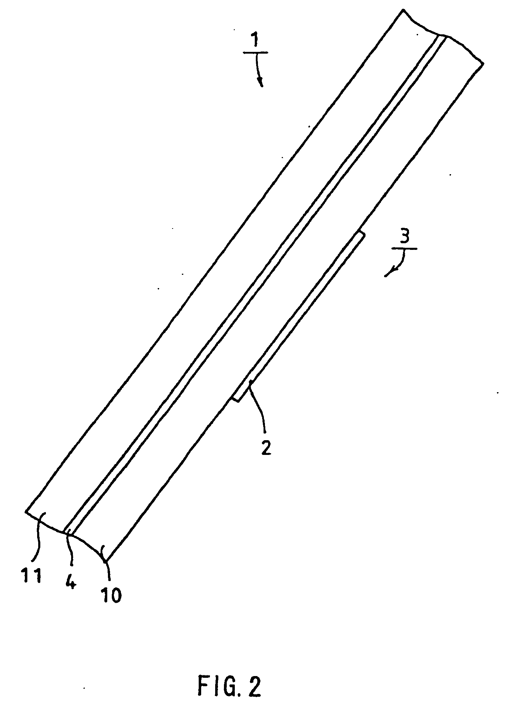

Furthermore, as shown Figs. 1 and 2, an ordinal lamination process was carried out using a PVB film 4 as an intermediate film. The glass plate 10 with the combiner part 3 is placed to be used inside a vehicle and another green glass plate 11 is placed to be used outside the vehicle. The reflection enhancing film 2 is formed in the combiner part 3 and not formed in the other part of the glass plate 10. Thus, a HUD combiner-provided laminated glass 1 was obtained.

The optical performance of the windshield thus obtained is indicated in Table 1. The visible light transmissivity and the visible light reflectance indicated in Table 1 were measured with light that was incident at an angle of 0° and with light that was incident at an angle of 60° with respect to the glass surface, respectively. For the measurement of the visible light reflectance, a sand blast process was conducted with respect to the rear face to exclude the influence of the reflection by the rear face.

**Table 1**

| | | Visible Light Transmissivity (%) | Visible Light Reflectance (%) | Solar Radiation Transmissivity (%) |
|---|---|---|---|---|
| Regular Part | | 84.5 | 9.3 | 63 |
| Combiner Part | Example 1 | 78.3 | 18.9 | - - - |
| | Example 2 | 78.3 | 20.3 | - - - |
| | Comparative Example 1 | 73.2 | 20.7 | - - - |

The thickness of each green glass plate was set to be 2 mm. The laminated glass sequentially included a green glass plate with a thickness of 2 mm, a PVB film with a thickness of 0.76 mm, and a clear glass plate with a thickness of 2 mm. It had a visible light transmissivity of 84.5% and a visible light reflectance of 9.3% that was measured with light incident at an angle of 60°.

As is apparent from Table 1, the region where the reflection enhancing film was formed had a reflectance of at least 15% and the region can function as a combiner part. The region where no reflection enhancing film was formed had a solar radiation transmissivity of 63% and thus was proved to have an excellent solar control property.

### Example 2

In Example 2, a HUD combiner-provided glass plate for a vehicle was obtained by the same manner as in Example 1 except that the mixture ratio of the solutions A and B was set to 1 : 10.8 during the preparation of the coating solution. Thus, a reflection enhancing film was formed that had a refractive index n of about 2.10 and a physical film thickness d of about 110 nm. The optical performance of the laminated glass plate thus obtained also is shown in Table 1.

As is apparent from Table 1, the region where the reflection enhancing film was formed had a reflectance of at least 15% and the region can function as a combiner part.

### Comparative Example 1

In Comparative Example 1, a HUD combiner-provided glass plate for a vehicle was obtained by the same manner as in Example 1 except that the mixture ratio of the solutions A and B was set to 1 : 4.8 during the preparation of the coating solution. Thus, a reflection enhancing film was formed that had a refractive index n of about 2.00 and a physical film thickness dof about 50 nm. The optical performance of the laminated glass plate thus obtained also is shown in Table 1.

As is apparent from Table 1, the region where the reflection enhancing film was formed a visible light transmissivity of 73.2%. In this example, a visible light transmissivity of at least 75% that satisfies the governmental standards was not obtained.

### Modified Example

FIG. 4 shows an example with gradation dots formed around a combiner part 3 to make its presence inconspicuous.

As described above, a windowpane with a HUD combiner according to the present invention can have a visible light reflectance of 15%. The combiner can meet the standard of a visible light transmissivity of at least 75%.

## Claims

1. A windowpane for a vehicle, provided with a head-up display combiner, said windowpane comprising:
a soda-lime silica glass plate (10,11); and
a reflection enhancing film (2) for the head-up display combiner that is formed in a first region (3) of a surface of the glass plate,
a second region of the surface where no film is formed,
wherein the reflection enhancing film has a refractive index of 1.75 to 2.4 and a film thickness of 90 nm to 130 nm, and
in the first region the windowpane has a visible light transmissivity ofatleast 75%.

2. The windowpane as claimed in claim 1, wherein the glass plate is a laminated glass (1) comprising a green glass plate (11), a clear glass plate (10) and an intermediate film that bonds the glass plates together.

3. The windowpane as claimed in claim 2, wherein the laminated glass (1) has a visible light transmissivity of at least 84%.

4. The windowpane as claimed in any one of claims 1 to 3, wherein in said first region (3) the windowpane has a visible light reflectance of at least 15% at the surface where the reflection enhancing film (2) is formed with respect to light that is incident thereon at an angle of 60°.

5. The windowpane as claimed in any one of claims 1 to 4, wherein in said first region (3) the windowpane has a visible light reflectance of not more than 22% at the surface where the reflection enhancing film (2) is formed with respect to light that is incident thereon at an angle of 60°.

6. The windowpane as claimed in any one of claims 1 to 5, wherein in said second region the windowpane has a solar radiation transmissivity of not more than 65%.

7. The windowpane as claimed in any one of claims 1 to 6, wherein the reflection enhancing film (3) comprises TiO₂ and/or SiO₂.

8. The windowpane as claimed in claim 7, wherein the reflection enhancing film (3) is formed by a sol-gel method and has a mole ratio of TiO₂ : SiO₂ in a range of 40 : 60 to 100:0.

9. The windowpane as claimed in claim 7, wherein the refl ection enhancing film (3) is formed by sputtering and has a mole ratio of TiO₂ : SiO₂ in a range of 31 : 69 to 100 : 0.

10. The windowpane as claimed in any one of claims 1 to 9, wherein the windowpane is free from a film that is formed on the reflection enhancing film (3).

## Patentansprüche

1. Fensterscheibe für ein Fahrzeug, welche mit einer Head-up-Display-Kombiniervorrichtung versehen ist, wobei die Fensterscheibe umfasst:
eine Platte aus Natronkalksiliciumoxidglas (10, 11); und
einen reflektionsverstärkenden Film (2) für die Head-up-Display-Kombiniervorrichtung, die in einem ersten Bereich (3) einer Oberfläche der Glasplatte gebildet ist,
einen zweiten Bereich der Oberfläche, in welchem kein Film gebildet ist, wobei der reflektionsverstärkende Film einen Brechungsindex von 1,75 bis 2,4 und eine Filmdicke von 90 nm bis 130 nm aufweist, und
die Fensterscheibe in dem ersten Bereich eine Durchlässigkeit von mindestens 75 % für sichtbares Licht aufweist.

2. Fensterscheibe nach Anspruch 1, wobei die Glasplatte ein Schichtglas (1) ist, welches eine grüne Glasplatte (11), eine klare Glasplatte (10) und einen dazwischen liegenden Film umfasst, der die Glasplatten zusammenbindet.

3. Fensterscheibe nach Anspruch 2, wobei das Schichtglas (1) eine Durchlässigkeit von mindestens 84 % für sichtbares Licht aufweist.

4. Fensterscheibe nach einem der Ansprüche 1 bis 3, wobei die Fensterscheibe in dem ersten Bereich (3) bezogen auf Licht, das mit einem Winkel von 60° darauf einfällt, an der Oberfläche, an welcher der reflexionsverstärkende Film (2) gebildet ist, ein Reflexionsvermögen von mindestens 15 % für sichtbares Licht aufweist.

5. Fensterscheibe nach einem der Ansprüche 1 bis 4, wobei die Fensterscheibe in dem ersten Bereich (3) bezogen auf Licht, das mit einem Winkel von 60° darauf einfällt, an der Oberfläche, an welcher der reflexionsverstärkende Film (2) gebildet ist, ein Reflexionsvermögen von nicht mehr als 22 % für sichtbares Licht aufweist.

6. Fensterscheibe nach einem der Ansprüche 1 bis 5, wobei die Fensterscheibe in dem zweiten Bereich eine Durchlässigkeit von nicht mehr als 65 % für Sonnenstrahlung aufweist.

7. Fensterscheibe nach einem der Ansprüche 1 bis 6, wobei der reflexionsverstärkende Film (3) TiO₂ und/oder SiO₂ umfasst.

8. Fensterscheibe nach Anspruch 7, wobei der reflexionsverstärkende Film (3) durch ein Sol-Gel-Verfahren gebildet ist und ein Molverhältnis von TiO₂ : SiO₂ im Bereich von 40 : 60 bis 100 : 0 aufweist.

9. Fensterscheibe nach Anspruch 7, wobei der reflexionsverstärkende Film (3) durch Sputtern gebildet ist und ein Molverhältnis von TiO₂ : SiO₂ im Bereich von 31 : 69 bis 100 : 0 aufweist.

10. Fensterscheibe nach einem der Ansprüche 1 bis 9, wobei die Fensterscheibe keinen Film aufweist, der auf dem reflexionsverstärkenden Film (3) gebildet ist.

## Revendications

1. Vitre pour véhicule pourvue d'un viseur à afficheur tête haute, ladite vitre comprenant :
une glace de verre en silicate sodocalcique (10, 11) ; et
une pellicule améliorant la réflexion (2), pour le viseur à afficheur tête haute, qui est formée dans une première région (3) d'une surface de la glace,
une seconde région de la surface dans laquelle aucune pellicule n'est formée,
dans laquelle la pellicule améliorant la réflexion a un indice de réfraction de 1,75 à 2,4 et une épaisseur de pellicule de 90 nm à 130 nm, et
dans la première région, la vitre a une transmissivité en lumière visible d'au moins 75 %.

2. Vitre selon la revendication 1, dans laquelle la glace est un verre feuilleté (1) comprenant une glace teintée verte (11), une glace claire (10) et une pellicule intermédiaire qui lie les glaces entre elles.

3. Vitre selon la revendication 2, dans laquelle le verre feuilleté (1) a une transmissivité en lumière visible d'au moins 84 %.

4. Vitre selon l'une quelconque des revendications 1 à 3, dans laquelle, dans ladite première région (3), la vitre a une réflectivité en lumière visible d'au moins 15 %, au niveau de la surface où la pellicule améliorant la réflexion (2) est formée, par rapport à une lumière qui est incidente sur celle-ci à un angle de 60°.

5. Vitre selon l'une quelconque des revendications 1 à 4, dans laquelle, dans ladite première région (3), la vitre a une réflectivité en lumière visible n'excédant pas 22 %, au niveau de la surface où la pellicule améliorant la réflexion (2) est formée, par rapport à une lumière qui est incidente sur celle-ci à un angle de 60°.

6. Vitre selon l'une quelconque des revendications 1 à 5, dans laquelle, dans ladite seconde région, la vitre a une transmissivité en rayonnement solaire n'excédant pas 65 %.

7. Vitre selon l'une quelconque des revendications 1 à 6, dans laquelle la pellicule améliorant la réflexion (3) comprend du TiO₂ et/ou du SiO₂.

8. Vitre selon la revendication 7, dans laquelle la pellicule améliorant la réflexion (3) est formée suivant un procédé sol-gel et a un rapport molaire de TiO₂:SiO₂ dans une plage de 40:60 à 100:0.

9. Vitre selon la revendication 7, dans laquelle la pellicule améliorant la réflexion (3) est formée par pulvérisation et a un rapport molaire de TiO₂:SiO₂ dans une plage de 31:69 à 100:0.

10. Vitre selon l'une quelconque des revendications 1 à 9, dans laquelle la vitre ne possède pas de pellicule qui soit formée sur la pellicule améliorant la réflexion (3).
